# EUROPEAN PATENT APPLICATION

(11) **EP 4 651 027 A1**
(43) Date of publication of application: **19.11.2025**
(21) Application number: 24305735.3
(22) Date of filing: 13.05.2024
(51) Int. Cl.: G06N 3/045

(54) **METHODS, ARCHITECTURES, APPARATUSES AND SYSTEMS FOR TRANSMITTING PARTIAL RESULTS IN DISTRIBUTED ARTIFICIAL INTELLIGENCE SYSTEMS**

(71) Applicant: InterDigital CE Patent Holdings, SAS, 75017 Paris (FR)
(72) Inventor: ONNO, Stephane, 35760 SAINT GREGOIRE (FR); QUINQUIS, Cyril, 35520 MELESSE (FR); FILOCHE, Thierry, 35410 CHATEAUGIRON (FR)
(74) Representative: Interdigital

(57) **Abstract**

Procedures, methods, architectures, apparatuses, systems, devices, and computer program products for distributed artificial intelligence in which, in an embodiment, a first device performs inference of a first part of a split artificial intelligence, AI, model to obtain a first result and intermediate data for use in inference using a second part of the split AI model, transmits, to a second device, the intermediate data and an identifier, and information representative of the first result to be combined with a second result resulting from the inference using the second part of the AI model and the identifier. The second device performs inference of the second part of the split artificial intelligence, AI, model to obtain a second result, associates the second result with the first identifier, and aggregates the first result and the second result using the first identifier and the second identifier.

## Description

### BACKGROUND

The present disclosure is generally directed to the fields of communications, software and encoding, including, for example, to methods, architectures, apparatuses, systems directed to transmitting partial results in collaborative Artificial Intelligence (AI) systems.

### SUMMARY

In a first aspect, the present principles are directed to a method including, in a first device, performing inference of a first part of a split artificial intelligence, AI, model to obtain a first result and intermediate data for use in inference using a second part of the split AI model, transmitting, to a second device, the intermediate data and an identifier, and transmitting, to the second device, information representative of the first result to be combined with a second result resulting from the inference using the second part of the AI model and the identifier.

In a second aspect, the present principles are directed to a method including, in a first device, performing inference of a first part of a split artificial intelligence, AI, model to obtain a first result and intermediate data for use in inference using a second part of the split AI model, associating the first result with a first identifier, transmitting, to a second device, the intermediate data and the first identifier, receiving, from the second device, information representative of a second result to be combined with the first result and a second identifier, and aggregating the first result and the second result using the first identifier and the second identifier.

In a third aspect, the present principles are directed to a method including, in a second device, receiving, from a first device, intermediate data resulting from inference using a first part of a split artificial intelligence, AI, model and a first identifier, the intermediate data intended for use in inference using a second part of the split AI model, receiving, from a first device, information representative of a first result to be combined with a second result resulting from the inference using the second part of the AI model and a second identifier, performing inference of the second part of the split artificial intelligence, AI, model to obtain a second result, associating the second result with the first identifier, and aggregating the first result and the second result using the first identifier and the second identifier.

In a fourth aspect, the present principles are directed to a method including, in a second device, receiving, from a first device, intermediate data resulting from inference using a first part of a split artificial intelligence, AI, model and a first identifier, the intermediate data intended for use in inference using a second part of the split AI model, performing inference of the second part of the split artificial intelligence, AI, model to obtain a second result, and transmitting, to the first device, the second result and the first identifier.

In a fifth aspect, the present principles are directed to a first device including at least one processor configured to perform inference of a first part of the split artificial intelligence, AI, model to obtain a first result and intermediate data for use in inference using a second part of the split AI model, transmit, to a second device, the intermediate data and an identifier, and transmit, to the second device, information representative of the first result to be combined with a second result resulting from the inference using the second part of the AI model and the identifier.

In a sixth aspect, the present principles are directed to a first device including at least one processor configured to perform inference of a first part of the split artificial intelligence, AI, model to obtain a first result and intermediate data for use in inference using a second part of the split AI model, associate the first result with a first identifier, transmit, to a second device, the intermediate data and the first identifier, receive, from the second device, information representative of a second result to be combined with the first result and a second identifier, and aggregate the first result and the second result using the first identifier and the second identifier.

In a seventh aspect, the present principles are directed to a second device including at least one processor configured to receive, from a first device, intermediate data resulting from inference using a first part of a split artificial intelligence, AI, model and a first identifier, the intermediate data intended for use in inference using a second part of the split AI model, receive, from a first device, information representative of a first result to be combined with a second result resulting from the inference using the second part of the AI model and a second identifier, perform inference of the second part of the split artificial intelligence, AI, model to obtain a second result, associate the second result with the first identifier, and aggregate the first result and the second result using the first identifier and the second identifier.

In an eighth aspect, the present principles are directed to a second device including at least one processor configured to receive, from a first device, intermediate data resulting from inference using a first part of a split artificial intelligence, AI, model and a first identifier, the intermediate data intended for use in inference using a second part of the split AI model, perform inference of the second part of the split artificial intelligence, AI, model to obtain a second result, and transmit, to the first device, the second result and the first identifier.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 illustrates the architecture with a media data source on the UE side where the UE generates or receives the input media;
FIG. 3 illustrates the architecture with a media data source on the network side where the network generates or receives the input media;
FIG. 4 illustrates two representations of the same example AI model;
FIG. 5 illustrates an example of a split of the model of FIG. 4 into two parts;
FIG. 6 illustrates an example of an architecture according to an embodiment of the present principles;
FIG. 7 illustrates a second example of an architecture according to an embodiment of the present principles;
FIG. 8 illustrates a flow chart of a method for split AI model negotiation according to an embodiment of the present principles;
FIG. 9 illustrates a flow chart of a first example method of split AI model inference at a first endpoint according to an embodiment of the present principles; and
FIG. 10 illustrates a flow chart of a first example method of split AI model inference at a second endpoint according to an embodiment of the present principles;
FIGs. 11A-11C illustrate a flow chart of a second example method of split AI model inference according to an embodiment of the present principles; and
FIG. 12 illustrates generic split inference according to the present principles.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

### Example Communications System

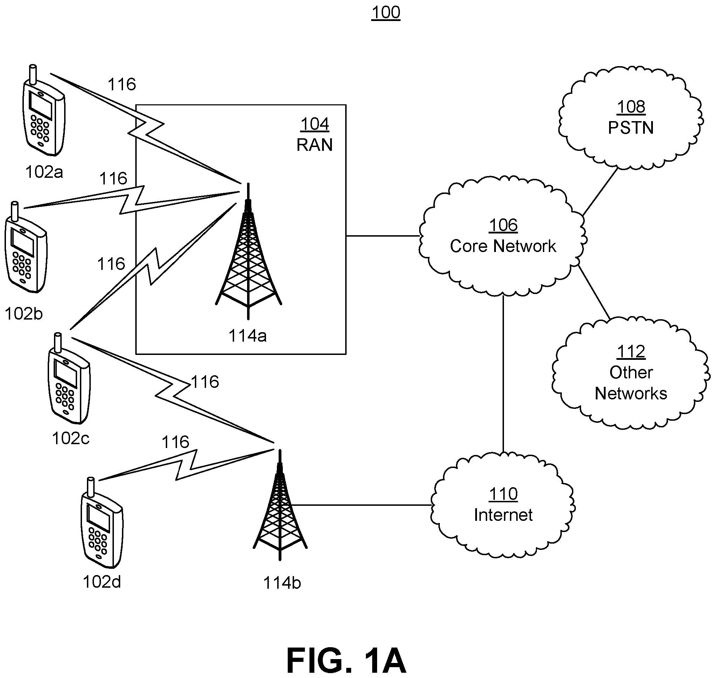

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

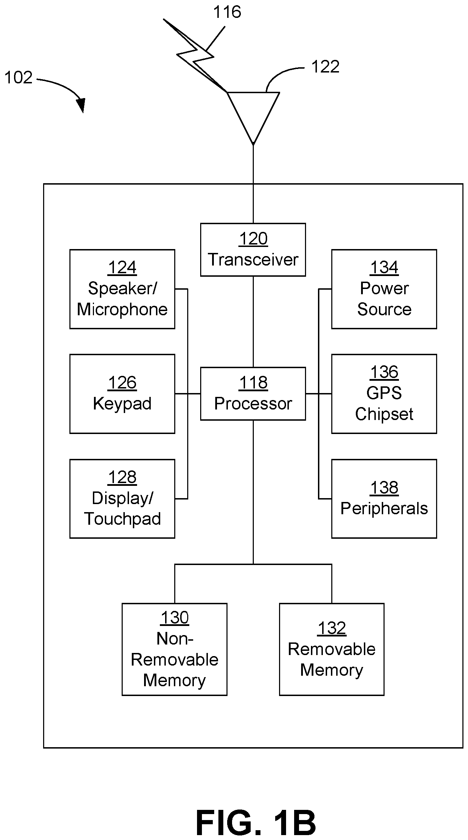

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

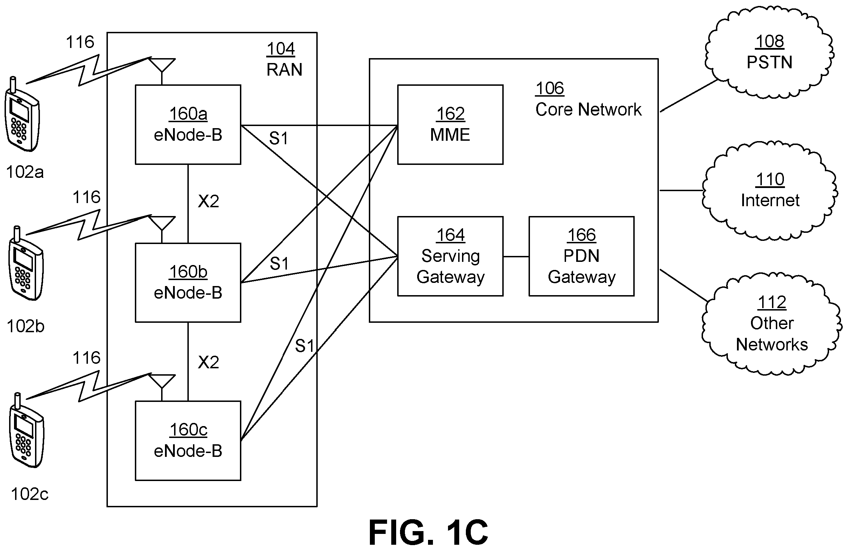

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11 ah supports 1 MHz, 2 MHz, 4 MHz, 8 MHz, and 16 MHz bandwidths using non-TVWS spectrum. According to a representative embodiment, 802.11ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

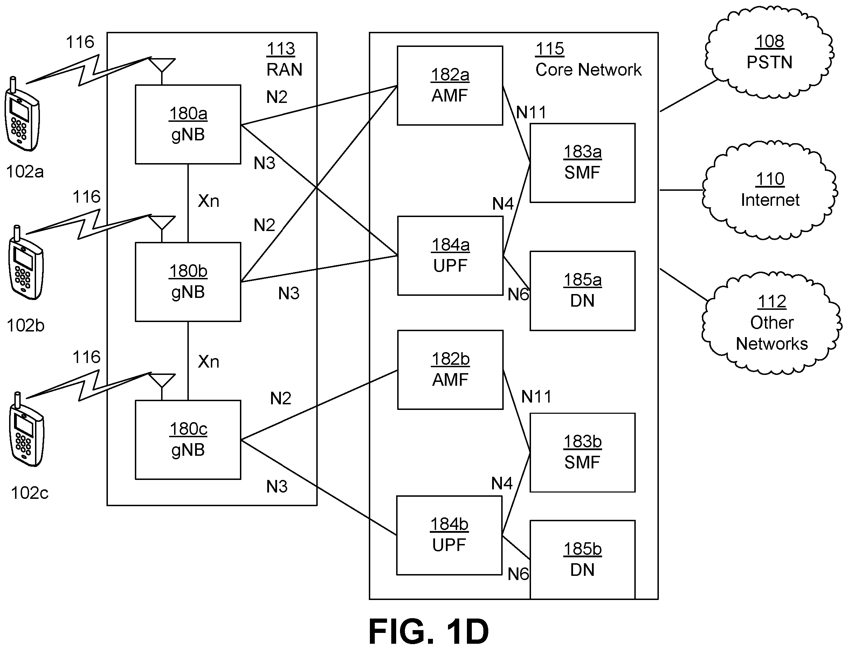

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signaling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

### Introduction

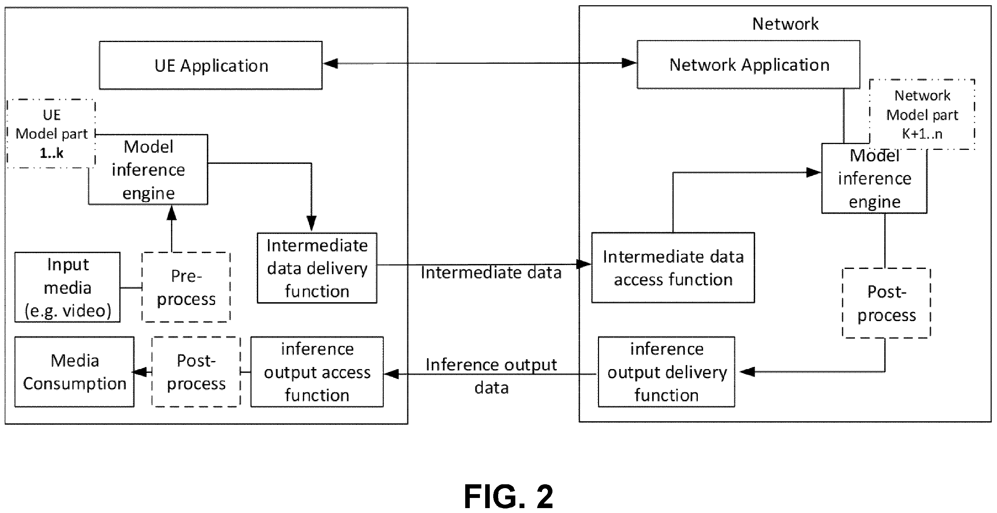

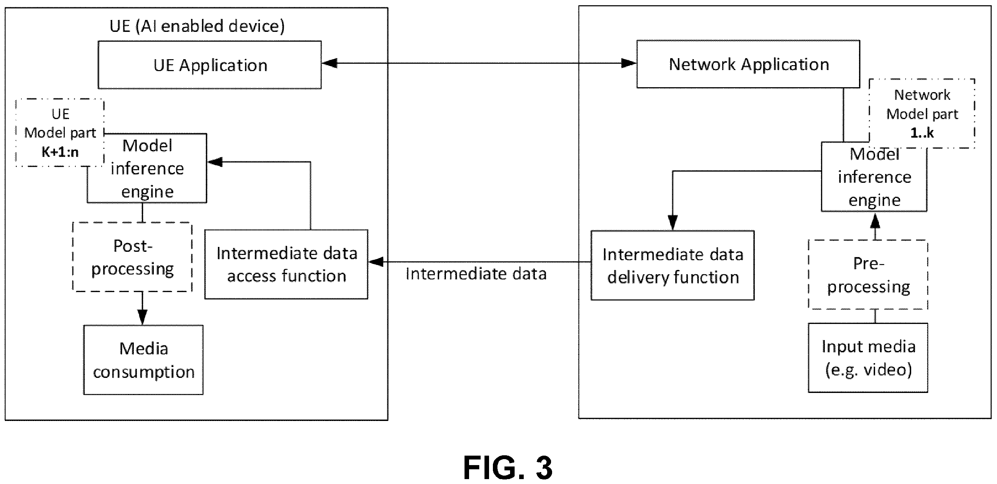

FIGs. 2 and 3 illustrate basic architectures for split inferences of a model composed of n layers or nodes (1...n) between a network and a UE as defined by to 3GPP SA4 AI4media (3GPP TR 26.297, v 0.40). In the architectures, a first inference processes a first part of the model, i.e. layers 1...k, and a second inference processes the second part of the model, i.e. layers k+ 1...n. The architectures show the delivery and access functions of intermediate data between the UE and the network for the two different cases depending on the origin of the input data.

FIG. 2 illustrates the architecture with a media data source on the UE side where the UE generates or receives the input media, for example video. The first part of the model is performed by the UE and the second part by the network. The resulting output data obtained by the network is sent back to the UE.

FIG. 3 illustrates the architecture with a media data source on the network side where the network generates or receives the input media. The first part of the model is performed by the network and the second part by the UE. The intermediate data obtained by the network is sent to the UE that obtains the resulting output data.

It is noted that the expressions "layers" and "nodes" are synonymous herein. "Layers" tends to be more used for frameworks like Tensorflow, while the Open Neural Network Exchange (ONNX) uses "nodes".

Typically, and as indicated in the FIGs. 2 and 3, pre-processing is required to adapt the input media to the input inference and post-processing is required to adapt the output results of the inference to the media consumption. The pre-processing is often implemented as an embedded function of an AI application.

Examples of pre-processing include framework adaptation, object detection, and natural language processing (NLP).

Framework adaptation may for example include converting media data to a tensor (numpy array, pytorch tensors), tensor reshaping to adapt the input data to a required input tensor shape, and tensor conversion.

Object detection may for example include image and video adaptation, such as format adaptation (for example rescaling, orientation, segmentation, centering to a point of interest), colour correction, light adjustment for image or video segment, image sampling, and video motion correction.

Natural language Processing (NLP) may for example include text analysis, removal or changing of text, text cleaning (for example removing punctuation, extra spaces, non-word characters, and stop words), stemming (i.e. reducing words to their word stems), lemmatization (i.e. reducing different forms of a word to a single form), tokenization (i.e. converting a sequence of text into smaller token parts), standardization of words by putting them in the lower case, and Part-of-speech (POS) Tagging (i.e. categorization of words in a text (e.g. noun, verb...)).

Post-processing operations, which typically depend on the AI model, include the transformation of output inference result combining the different partial results data (e.g. python tensors) to a media output representation (text/image/video) depending on the AI application (classification, segmentation, Natural language Processing (NLP), super resolution etc.).

Examples of post-processing include object detection and NLP.

As an example of object detection, the predictions (i.e. the output of the inference) may comprise a plurality of partial results P1, P2, P3, where P1 may represent the bounding box coordinates surrounding the detected object (e.g. expressed in top x coordinate, top y coordinate, and width and height in pixel values), P2 may be an identifier (e.g. 1 for a person, 3 for a car) corresponding to a label of the object (known in the ground truth), and P3 may be confidence scores of the detection (e.g. from 0 to 1). Another possibility is to define the bounding box as in ssd_resnet with Top x, Top y, Bottom X, and Bottom Y having values from 0 to 1 (where top x=0, top y=0 indicates the upper left corner and top x=1, top y=1 indicates the bottom right corner).

In this case, a post-processing operation is required to standardize the different outputs and to calculate a final (consolidated, aggregated) result from the three predictions P1, P2, P3.

For example, for P1 representing bounding boxes coordinates, output model coordinates may be expressed in pixels (640), or as a fraction of the entire width (0.5 meaning 640 if the width equals 1280). Other models may give (x,y) of the top left point of the box, and (x,y) of the bottom right point of the box), while others still may give (x,y) of the top left point of the box, and (width,height) to reach the bottom right point of the box starting from the top left point.

For example, for P2, the label identifier can vary from 0 to 999, or from 1 to 1000, for a same reference (e.g. coco dataset). In addition, models may have a dataset that includes another dataset (for example, a dataset with 1200 references of which the first 1000 are the same as in the coco dataset). In this case, post-processing can for example limit the value to 1000 and remove others to be able to compare various model results.

The object detection post-processing may use a threshold to keep only meaningful results. For example, the post-processing may keep only the predictions P1, P2 for which the confidence score P3 is above 0.4.

When it comes to NLP, an example of simple post-processing is to use a threshold to keep only meaningful results, e.g. with a confidence score above 0.4.

Other examples of NLP post-processing include stemming and lemmatization to enable a standardized comparison of outputs of different NLP models, text segmentation that breaks down a long text into smaller sentences to ease a further process like sentiment analysis, aggregated sentiment analysis that aggregates the sentiment of a plurality of sentences to generate a sentiment for a whole text, and aggregated data analysis that aggregates grammatical statistics over a plurality of sentences to provide statistics for a whole text.

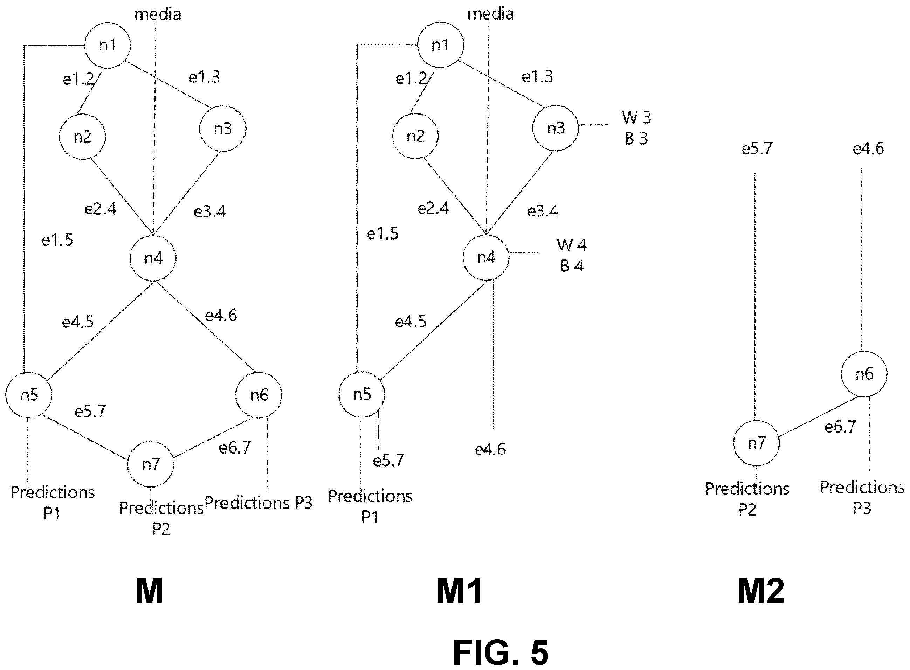

For the split of the AI model between the UE and the network, this may be done using a procedure defined in TR 26.927, v0.40, Figure 5.3.4-1, Procedures for split AI/ML operation.

Of particular relevance to the present principles are steps 5 (Negotiation), 14 (Split inference processing) and 15 (Split point update and inference processing), for which the description of each will now be reproduced.

"5. Negotiate splitting the AI inference process. A split point is negotiated between the UE and the network, using information from steps 2, 3 and 4, in order to satisfy the service, capability and AI model inference latency requirements. The decision of whether the split point is static or whether it can be updated dynamically during the service may be negotiated. Related metadata may be shared between the network and UE depending on the configuration and a set of split points can be negotiated."

"14. The split inference runs between the UE and the network. Depending on the specific split inference scenario, the UE and the network may deliver and/or access Intermediate data, Inference output data and/or metadata using the pipelines defined in the AI data delivery session."

"15. A split point update is triggered, for example from the media aware application to adapt to the new conditions (e.g. UE capabilities or network capacity has changed). The new split point metadata information is either negotiated between the UE and the network or pass alongside the delivery pipeline from the UE to the network side."

The relevance of these steps will be explained later.

A trained AI model such as a Deep Neural Network (DNN), for example a Convolutional Neural Network (CNN) often used for computer vision and automatic speech recognition, can be illustrated as a collection of layers/nodes that are interconnected by edges and that can be represented in a directed acyclic graph.

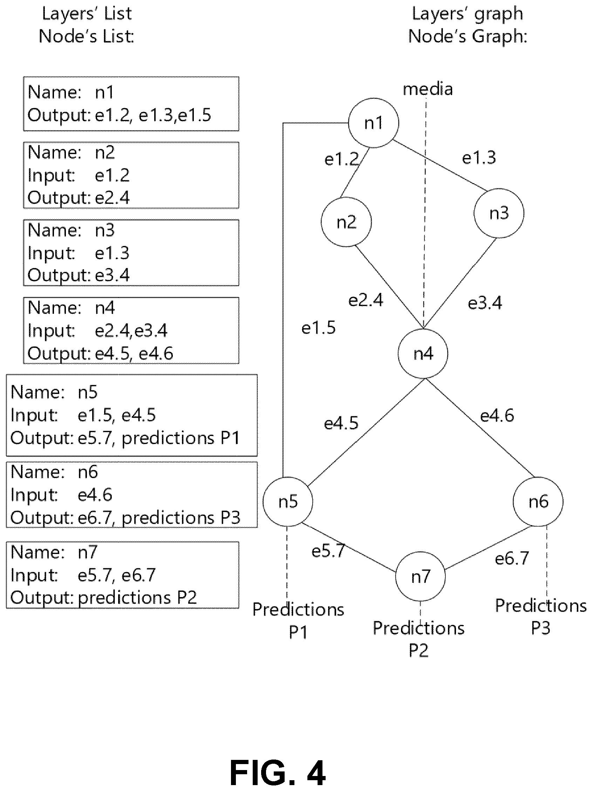

FIG. 4 illustrates two representations of the same example AI model. To the left, the model is represented as a list of nodes or layers; to the right, the model is represented as a direct acyclic graph. In this example model, an image, 'media', is input to node 4 (n4) and nodes 5-7 (n5, n6 and n7) generate predictions: n5 generates predictions P1, n6 generates predictions P2 and n7 generates predictions P3.

For an object detection example based on the *RetinaNet* model, P1 may represent the bounding boxes coordinates surrounding the detected object (e.g. expressed in Top x, Top y, Width, Height in pixel values) , P2 may be an identifier (e.g. 1 for Person, 3 for car) corresponding to a label of the object (known in the ground truth), and P3 may be the confidence scores of the detection (e.g. from 0 to 1). For *ssd_resnet*, the bounding box is expressed in Top x, Top y, Bottom X, Bottom Y with values from 0 to 1 (e.g. top x=0 top y=0 being the upper left and top x=1 top y=1 the bottom right).

Herein, a partial result corresponds to output predictions of a node or layer. The aggregation of the partial results makes up the final result data. Post-processing can be applied to the partial results without the need for the final results. A partial result can be considered as the final results data for a given application. For example, in the example in the previous paragraph, in case the application only needs to know if there is an object in an image, the partial result that is the label identifier P2 may be sufficient.

As already mentioned with reference to FIGs. 2 and 3, an AI model M can be split in two parts where a first model part M1 runs on (i.e. is executed by) a first device and a second model part M2 runs on a second device.

The full AI model M can be split into M1 and M2 independently on the first device and the second device.

FIG. 5 illustrates an example of a split of the model M of FIG. 4 into parts M1 and M2. As can be seen, M1 includes nodes n1-n5, where n4 receives the media as input and n5 outputs predictions P1 and e5.7, while n4 outputs e4.6. M2 includes n6 and n7 that respectively receive partial results e4.6 and e5.7. n6 outputs intermediate result e6.7 and predictions P3 while n7 outputs predictions P2. Also illustrated are weights, W, and biases, B, used for nodes n3 and n4.

A first issue with this is related to the partial results data. As can be seen, in FIG. 5, M1 produces partial results data before the split and M2 produces other partial results data after the split. Transferring only the intermediate data to M2 is not sufficient to generate a consolidated final result (as predictions P1 are generated by M1).

A second issue is related to out-of-band delivery of results. Output results data and intermediate data may be transmitted over different communication channels, which means that output results data may be characterized as out-of-band relative to the intermediate data although there is a relation between the two.

It will thus be appreciated that there is a desire for solutions for determination whether partial results data transmission is required for candidate split configurations. Put another way, whether the selected model produces partial results data in different nodes and whether candidate split point configurations produce partial results data in different nodes.

It will thus be appreciated that there is a desire for solutions for synchronisation and aggregation of the partial results data of a first inference by a first part and delivered via an out-of-band channel with the partial results data of a second part.

It will thus be appreciated that there is a desire for solutions for inference based on intermediate data received from the first endpoint.

Generally speaking, the present principles provide a method of transporting partial results data via an out-of-band communication medium, as opposed to transporting intermediate data, from one endpoint to another depending on the selection of the model to be distributed between two endpoints.

Salient features of the present principles include negotiation of partial results data to be transmitted from one endpoint to another endpoint depending on the split points configurations, negotiation of the transmission of partial results data in an out-of-band medium independent from the transport of intermediate data, negotiation of a common split points configuration format structure to share on both endpoints, definition of the format of the transmitted partial results data including input media data information and intermediate data, synchronisation of the delivery and the reception of intermediate data and partial results data received over a different channel (e.g. carrying synchronised input media data information (IMDI) with intermediate data and with partial results out-of-band, using the IMDI to synchronise the reception of intermediate data and partial results, and using a partial result data trigger flag indicating that partial results have been produced by the first inference and are required to produce final results at the second endpoint), decision on whether to transmit partial results depending on the selection or the reselection of a negotiated split point configuration and delivery and access of partial results data with input media data information (IMDI) transmitted out-of-band from intermediate data with IMDI .

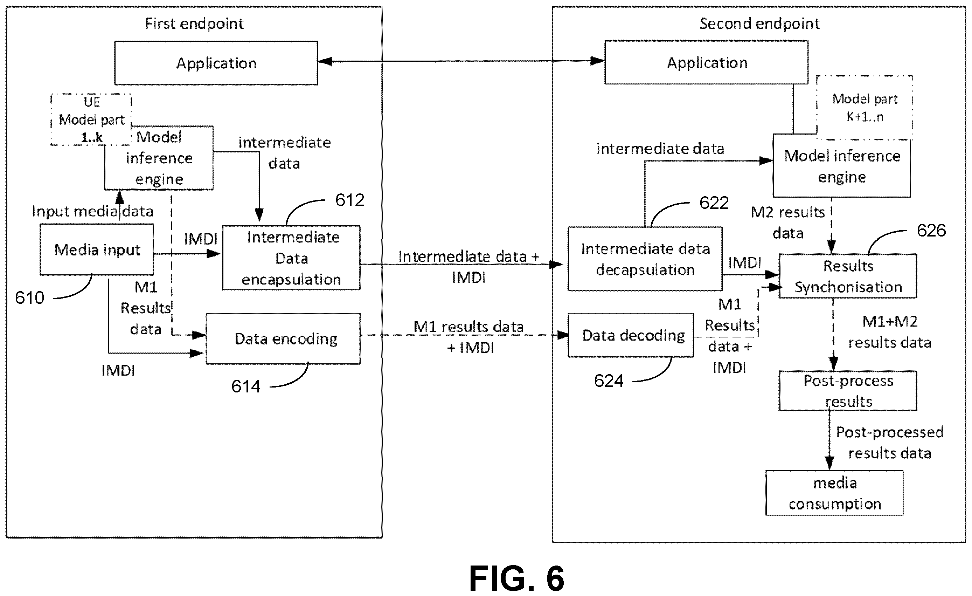

FIG. 6 illustrates a first example of an architecture according to an embodiment of the present principles.

Compared to FIG. 3, there are a number of differences. The first endpoint includes an intermediate data encapsulation unit 612 that is provided with input media data information (IMDI) related to first input media and a data encoding unit 614 that also is provided with the IMDI, both by the media input unit 610. The intermediate data encapsulation unit 612 provides the intermediate data together with the IMDI to the second endpoint. The data encoding unit 614 provides encoded results data and the IMDI to the second endpoint. The second endpoint includes an intermediate data decapsulation unit 622 that receives the intermediate data and the IMDI, decapsulates the intermediate data that is provided to an inference engine, while it provides the IMDI to a results synchronisation unit 626. The second endpoint also includes a data decoding unit 624 that receives the M1 results data and the IMDI, that it decodes and provides (with the IMDI) to the results synchronisation unit 626. The results synchronisation unit 626 uses the IMDI received from the intermediate data decapsulation unit 622 and the IMDI received from the data decoding unit 624 to synchronise the M2 results data received from the inference engine with the M1 results data received from the data decoding unit 624. Put another way, the results synchronisation unit 626 aggregates the M1 results data and the M2 results data. The synchronised data is output for post-processing and media consumption.

As can be seen, in FIG. 6, the second endpoint post-processes the final results.

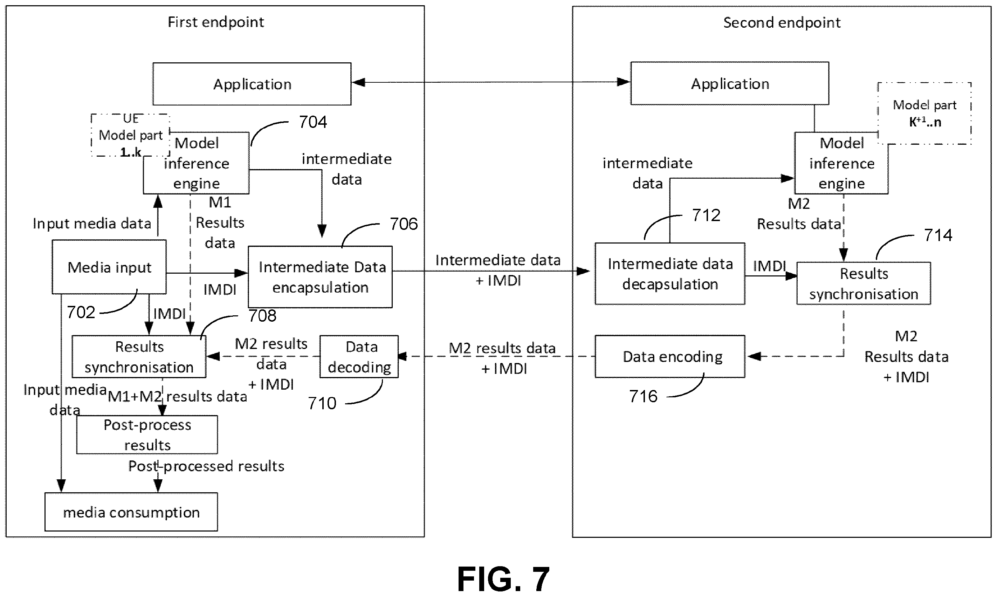

FIG. 7 illustrates a second example of an architecture according to an embodiment of the present principles. In this figure, more similar to FIG. 2, the first endpoint keeps the M1 partial results, receives the M2 partial results, synchronises them and then performs the post-processing and the media consumption.

Compared to FIG. 2, the media input unit 702 of the first endpoint provides input media data to an inference engine 704 and a corresponding IMDI to an intermediate data encapsulation unit 706. The inference engine 704 outputs intermediate data to the data encapsulation unit 706 and M1 partial results data to a results synchronisation unit 708. The data encapsulation unit 706 encapsulates the intermediate data and outputs the encapsulated intermediate data with the IMDI to the second endpoint.

At the second endpoint, an intermediate data decapsulation unit 712 decapsulates the encapsulated intermediate data, provides the intermediate data to the inference engine in the second endpoint and the IMDI to a results synchronisation unit 714. The results synchronisation unit 714 associates the M2 partial results data with the IMDI and sends this to a data encoding unit 716 that encodes the M2 partial results data and outputs the encoded M2 partial results data and the IMDI to the first endpoint.

At the first endpoint, a data decoding unit 710 decodes the encoded M2 partial results data and sends the M2 partial results data and the IMDI to the results synchronisation unit 708. The results synchronisation unit 708 uses the IMDI received from the media input unit 702 and the IMDI received from the data decoding unit 710 to synchronise (i.e. aggregate) the M1 partial results data with the M2 partial results data. The first endpoint then post-processes the final results data (i.e. the synchronised or aggregated results data) and uses the outcome for media consumption.

As before, the inference of a trained AI model is split between the first endpoint and the second endpoint, where the first endpoint infers a first model part/subset including for example a set of layers or nodes from 1...k (input to layer/node k) and the second endpoint infers a second model part/subset with layers/nodes k+1 up to the last output layer/node n. The selection of the split point determines the split point k. The endpoints negotiate a set of split point configurations including different split points.

In addition, an application running on each endpoint determines how and where the partial results data (i.e. M1 results) are post-processed if required by at least one split point configuration.

Therefore, the selection of the split point and the configuration of the application determine whether it is necessary to transmit partial results data from one endpoint to the other.

Negotiation includes the encapsulation format for the intermediate data as well as the partial results data to be transmitted.

The inference loop begins with the selection or reselection of a negotiated split point configuration. The selected split point and the application setup determine whether partial results data is to be transmitted between the two endpoints. The first endpoint infers the first model part, transmits the necessary data (e.g. the intermediate data and the partial results data) in the negotiated format to the second endpoint which infers the remaining part of the model, post-processes the partial results from M1 and from M2 to produce post-processed results for media consumption.

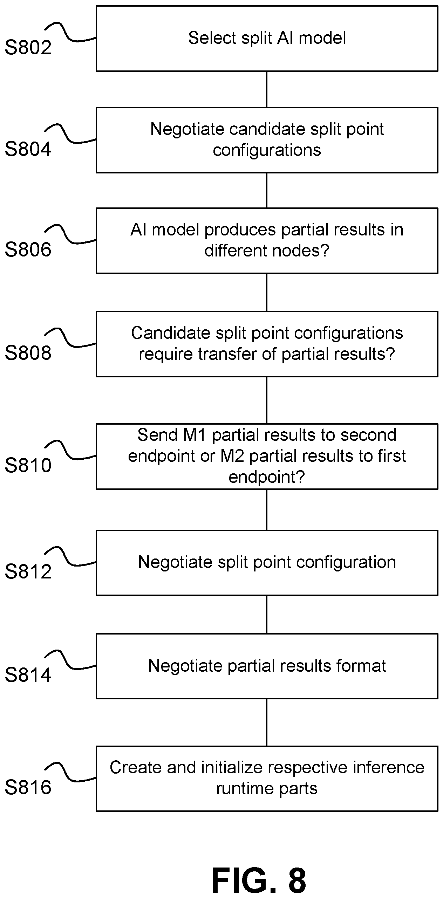

FIG. 8 illustrates a flow chart of a method for split AI model negotiation according to an embodiment of the present principles. The illustrated method can for example be used by the architecture illustrated in FIGs. 6 and 7 for the first and the second endpoint to negotiate the set of split point configuration candidates for the selected AI model.

In step S802, one or both of the first and the second endpoint selects a split AI model to use. The selection can for example be based on AI model(s) available to one or both endpoints, the desired output, or on requirements of the input media data.

In step S804, the first and the second endpoint negotiate candidate split point configurations, i.e. different sets of model parts separated by a split point. This can be for example be done based on processing capacities of the endpoints or confidentiality requirements relating to the input media data.

In step S806, at least one of the endpoints determine whether the AI model produces partial results in different nodes of the model. For the example model in FIG. 4, nodes n5, n6 and n7 produce partial results.

In step S808, at least one of the endpoints determine whether the negotiated split point configurations require transfer of partial results. This is easily determined based on the respective split points.

In step S810, at least one of the endpoints determine whether M1 partial results are to be sent to the second endpoint or whether M2 partial results are to be send to the first endpoint.

In step S812, the endpoints negotiate a reference split point configuration structure, which will be further described.

In step S814, the endpoints negotiate the intermediate data format and the partial results data format, where both will be transmitted out-of-band with IMDI.

In step S816, based on the results of the negotiations, the endpoints create and initialize the respective inference runtime parts.

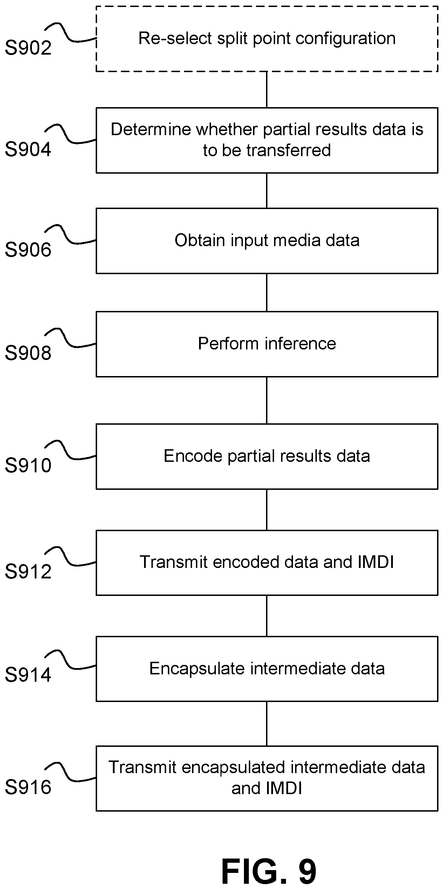

FIG. 9 illustrates a flow chart of a first example method of split AI model inference at a first endpoint according to an embodiment of the present principles. The illustrated method can for example be used by the architecture illustrated in FIG. 6, typically after having negotiated as described with reference to FIG. 8, for the first endpoint to perform a first part of an AI model and provide intermediate data and partial results data to the second endpoint that performs a second part of the AI model.

In step S902, the first endpoint can reselect a split point configuration and inform the second endpoint of the selection. It is noted that the first endpoint can also use the split point configuration negotiated in FIG. 8.

In step S904, the first endpoint determines whether partial results data is required for transfer to the second endpoint.

In step S906, the first endpoint obtains input media data. In an example, the first endpoint generates the input media data, for example by capture using a camera.

In step S908, the first endpoint infers the input media data to obtain M1 partial results data and intermediate data.

In step S910, the first endpoint encodes the M1 partial results data.

In step S912, the first endpoint transmits the encoded M1 partial results data with IMDI to the second endpoint.

In step S914, the first endpoint encapsulates the intermediate data.

In step S916, the first endpoint transmits the encapsulated intermediate data with IMDI to the second endpoint.

It is noted that the presented order is just an example and that steps can be performed in different order. For example, the encoding (S910) and the encapsulating (S914) can be performed in any order (or even in parallel). Likewise, the two transmitting steps (S912 and S916) can also be performed in any order. The only requirement is that the encoding (S910) is performed before the corresponding transmitting (S912) and that the encapsulating (S914) is performed before the corresponding transmitting (S916).

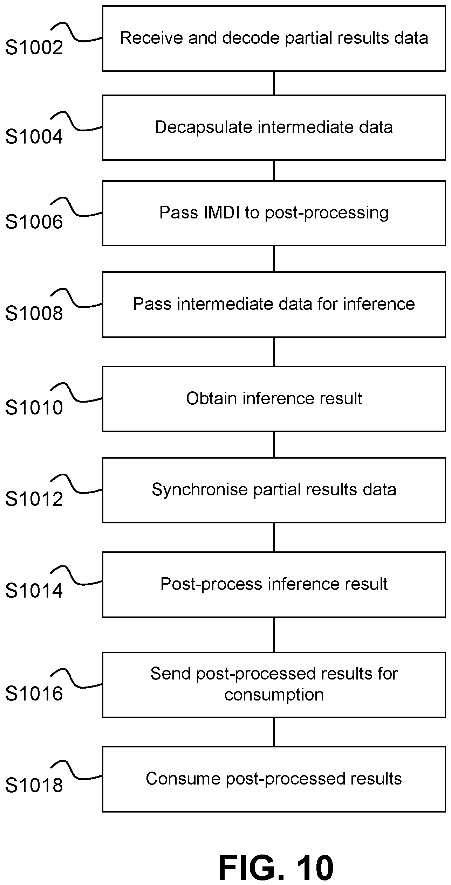

FIG. 10 illustrates a flow chart of a first example method of AI model inference at the second endpoint according to an embodiment of the present principles. The illustrated method will typically be performed after the method illustrated in FIG. 9.

In step S1002, the second endpoint receives and decodes the M1 partial results data.

In step S1004, the second endpoint decapsulates the received encapsulated intermediate data with IMDI.

In step 1006, the IMDI is passed to the post-processing unit, if required.

In step S1008, the second endpoint passes intermediate data to the inference engine for inference.

In step S1010, the inference engine uses the second part of the model, i.e. M2, to obtain M2 partial results.

In step S1012, the second endpoint uses the IMDI to synchronise the M1 partial results data and the M2 partial results data to obtain final results.

In step S1014, the second endpoint post-processes the final results.

In step S1016, the second endpoint passes the post-processed final results for consumption.

In step S1018, the second endpoint consumes the post-processed final results. This can for example be rendering of an image/video from post-processed output media, if necessary with related input media data information.

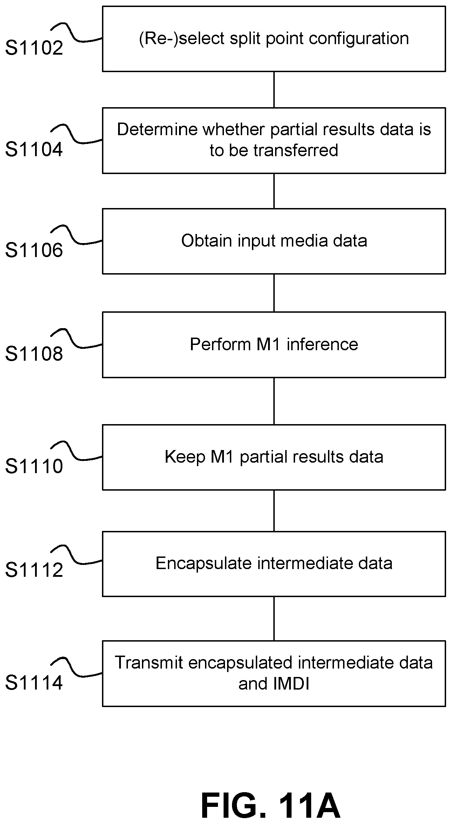

FIGs. 11A-11C illustrate a flow chart of a second example method of split AI model inference according to an embodiment of the present principles. The illustrated method can for example be used by the architecture illustrated in FIG. 7, typically after having negotiated as described with reference to FIG. 8, for the first endpoint to perform a first part of an AI model and provide intermediate data and partial results data to the second endpoint that performs a second part of the AI model.

Beginning with FIG. 11A that illustrates a first part of the method at the first endpoint, in step S1102, the first endpoint can reselect a split point configuration and inform the second endpoint of the selection. It is noted that the first endpoint can also use the split point configuration negotiated in FIG. 8.

In step S1104, the first endpoint determines whether partial results data is required for transfer to the second endpoint.

In step S1106, the first endpoint obtains input media data. In an example, the first endpoint generates the input media data, for example by capture using a camera.

In step S1108, the first endpoint infers the input media data to obtain M1 partial results data and intermediate data.

In step S1110, the first endpoint keeps (i.e. stores) the M1 partial results data.

In step S1112, the first endpoint encapsulates the intermediate data.

In step S1114, the first endpoint transmits the encapsulated intermediate data with IMDI to the second endpoint.

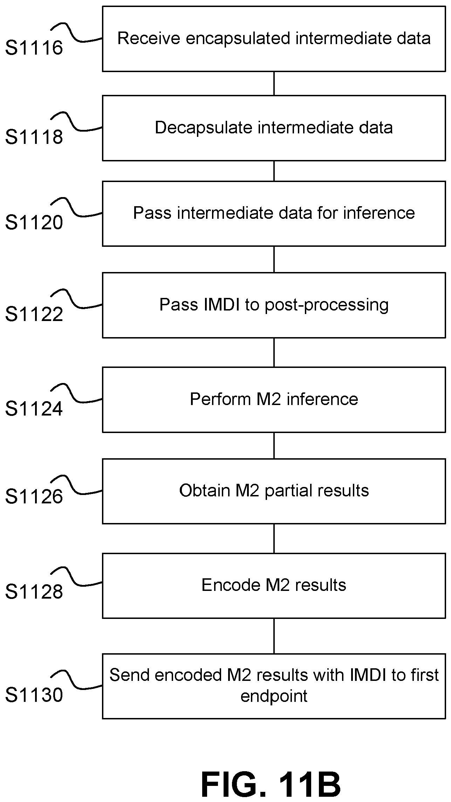

Continuing with FIG. 11B, it illustrates a flow chart of the second example method of AI model inference at the second endpoint according to an embodiment of the present principles. The illustrated method follows the method illustrated in FIG. 11A.

In step S1116, the second endpoint receives encapsulated intermediate data with IMDI.

In step S1118, the second endpoint decapsulates the received encapsulated intermediate data.

In step S1120, the second endpoint passes the decapsulated intermediate data to the inference engine for inference.

In step 1122, the IMDI is passed to the post-processing unit, if required, and to the encoding unit.

In step S1124, the inference engine uses the second part of the model, i.e. M2, to obtain M2 partial results data, in step S1126.

In step S1128, the second endpoint encodes the M2 partial results data.

In step S1130, the second endpoint sends the encoded M2 partial results data and the IMDI to the first endpoint.

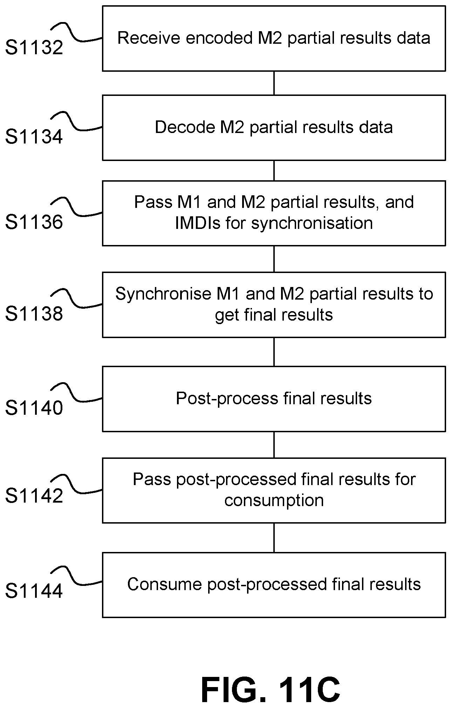

Finishing with FIG. 11C, it illustrates a second part of the method at the first endpoint.

In step S1132, the first endpoint receives the encoded M2 partial results data and the IMDI.

In step S1134, the first endpoint decodes the encoded M2 partial results data.

In step S1136, the first endpoint passes the M1 partial results data and the associated IMDI and the M2 partial results data and the associated IMDI to the synchronisation unit. It is noted that synchronisation is enabled when the IMDIs are the same.

In step S1 138, the M1 partial results and the M2 partial results are synchronised to obtain final results.

In step S1140, the final results are post-processed.

In step S1142, the post-processed final results are passed to the media consumption unit.

In step S1144, the post-processed final results are consumed.

Transmitted data formats will now be described.

Input media data information (IMDI) includes an identifier that uniquely identifies the corresponding input media data to which the results refer.

Input media data can for example be a media frame or a sequence of media frames (e.g. a data image, a sound batch of images, a video sequence, an audio sequence etc..).

IMDI may include one or more of a data identifier (e.g. a number), an incremental data counter, a data timestamp, a frame identifier, sequence information, a start sequence frame number, an end sequence frame number, a start sequence timestamp, an end sequence timestamp and a sequence duration.

The split points configuration structure format for the second endpoint may include output data for a plurality split points with different types of output data depending on whether output data is intermediate data or partial results resulting from the first inference. Each split inference output data for the second endpoint may include one or more of a split point output identifier and a split point output structure data.

The split point output identification can, for example, be a split point identifier such as a split point name or a split point number.

The split point output structure data identifies, for a given split point configuration, one or more nodes that can produce output, i.e. intermediate data or partial results data. The split point output structure data can include IMDI and a list of nodes providing output.

The list of nodes can include, for each node, a node identifier, e.g. Relu_output_0 or node_10, output format structure type (e.g. `partial results data type', 'intermediate data type'), output data format (e.g. partial results data format or intermediate data format), output data length and output data payload.

The partial results data format may include one or more of media data type, media output data format, media data transport and output result format, each of which will now be described in more detail.

Media data type can describe the type of the media data, for example 'image,' 'video sequence,' 'audio sample,' 'haptic samples' and 'text'.

Media output data format can include one or more of tensor name (e.g. "input_image"), tensor dimension (e.g. [3,224,224]), tensor element type (e.g. integer 32, integer 64, float), compression algorithm (for example, for image: e.g. JPEG, WebP, HEIC; video: e.g.: e.g. H264/AVC, H265/HEVC, H266/VVC, VP9, AV1; volumetric video: e.g. V3C; audio: e.g. AAC, Wave, MP3; haptic: e.g. HMPG, MIHS; text: e.g. RLE, BWT, Huffman coding), media transparency, media type (for example, for audio: 2D/3D/Spatial; image, video: 2D/3D; volumetric video: Video Point Cloud, Immersive video), and media rate (for example audio sample rate: 44,1 kHz, 48 kHz, 96 kHz; video frame rate: 30 FPS, 60 FPS).

Media data transport can include one or more of media data transport type (e.g. 'Data' or 'URL'), media data payload length (e.g. 16262662), data payload (for example a media data bitstream, a media data tensor value or a URL).

Output data format can include a post-processed flag, element type (e.g. int/float/string), value (e.g. accuracy, confidence, quality element) and an element list (e.g. bounding box coordinates, a text string for NLP).

The intermediate data format is a format to encapsulate intermediate data resulting from the first inference required as an input to the second inference.

The intermediate data format structure can include one or more of an partial result data trigger flag indicating that at least one split point provides partial results data required for post-processing, an intermediate data header (including for example batch size, if different from input tensor dimension: e.g. 10; tensor dimension: e.g. [1,64,64,62]; tensor element type: e.g. integer 32, integer 64, float; compression algorithm: e.g. none, name or identifier of the algorithm (such as FC-VCM)) and an intermediate data transport (e.g. including an intermediate data payload length and the corresponding data payload).

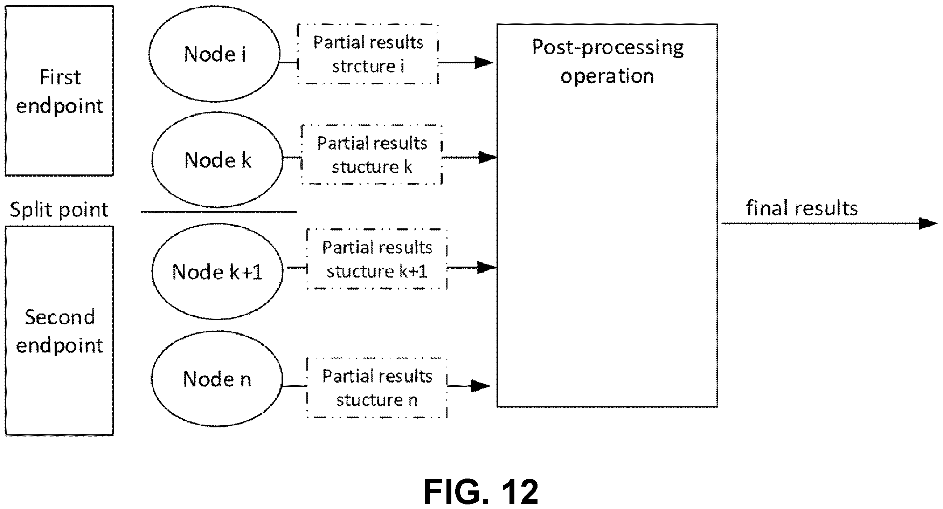

FIG. 12 illustrates generic split inference according to the present principles where a post-processing operation requires partial outputs produced by two different endpoints to perform the final result. At a first endpoint performing a first part of an AI model, node i produces partial results i and node k produces partial results k. At a second endpoint performing a second part of the AI model separated at the split point, node k+1 produces partial results k+1 and node n produces partial results n. All the partial results are fed to a post-processing operation that generates the final results.

Turning back to FIG. 5, illustrates an example where the first endpoint produces partial results data on node 5 and a second endpoint produces partial results data on node 6 and 7. The post-processing operation negotiated in one endpoint requires the transmission of partial results data from the other endpoint. If the post-processing is performed in the first endpoint, the M2 partial results, including node 6 and node 7 output, may be transmitted to the first endpoint to calculate the final result.

As already described, split inferencing has input and output. A split point configuration determines the input data structure required for the split inference from the first endpoint to the second endpoint or from the second endpoint to the first endpoint depending on which device performs the post-processing.

Intermediate data and partial output results can be transmitted using different transmission means without synchronisation.

When the second endpoint receives the M1 results before the intermediate data, it stores the received M1 results awaiting the reception of the intermediate data. Then, when the intermediate data is received, the partial results data trigger flag may be set to indicate and trigger that there are partial results data to consider together with the current split inference results.

The second endpoint reads the IMDI, e.g. "frame identifier #1", from the intermediate data structure to retrieve the corresponding partial output structure having the same IMDI.

Conversely, when the intermediate data is transmitted before the partial results data, the second endpoint infers the second part, reads the IMDI and waits until the reception of the partial results data having the same IMDI.

The second endpoint post-processes the final results data from the received partial results data and partial results data from the current endpoint as already described.

Herein, reference has been made to TR 26.927, v0.40, Figure 5.3.4-1, Procedures for split AI/ML operation. It is noted that, using the present principles, sections 5, 14 and 15 can be modified as follows, where bold indicates added text and italics indicates references to out-of-band.

5. Negotiate splitting the AI inference process. A split point is negotiated between the UE and the network, using information from steps 2, 3 and 4, in order to satisfy the service, capability and AI model inference latency requirements. The decision of whether the split point is static or whether it can be updated dynamically during the service may be negotiated. Related metadata may be shared between the network and UE depending on the configuration and a set of split points can be negotiated. **A negotiated split point may require transmitting whole or part of output results data with intermediate data when the local endpoint inferring the first part of model produces partial results data required in the second endpoint. Results requires post-processing operations that may be done in the first endpoint or in the second endpoint (UE/Network). *Output results data format and intermediate data format are negotiated. Output results data and intermediate data must carry a common input media data information for synchronisation when output results data and intermediate data are sent and received in different communication channels.***

14. The split inference runs between the UE and the network. Depending on the specific split inference scenario, the UE and the network may deliver and/or access Intermediate data, Inference output data and/or metadata using the pipelines defined in the AI data delivery session. **Depending on the negotiated split point configuration, the UE and the network may transmit partial results data media with intermediate data according to the negotiated formats in step 5.**

15. A split point update is triggered, for example from the media aware application to adapt to the new conditions (e.g. UE capabilities or network capacity has changed). The new split point metadata information is either negotiated between the UE and the network or pass alongside the delivery pipeline from the UE to the network side. **Depending on the negotiated split point configuration, the UE and the network may either start to deliver partial results data with intermediate data according to the negotiated formats or stop delivering partial results data if not required on the other endpoint according to the negotiated formats in step 5.**

It will be appreciated that the present principles can enable a larger range of split points when a split is needed.

It will also be appreciated that the present principles can enable split inference for complex models on any split point configurations, including those that produce partial results in nodes belonging to the first part of the model to infer in a first endpoint and required for the calculation of the final results with a partial results produced by nodes belonging to a second part of the model to infer in the second endpoint.

t will also be appreciated that the present principles can enable transmission of partial results over a different channel than that used for the intermediate data, thus providing flexibility.

### Conclusion

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, ¶ 6 or means-plus-function claim format, and any claim without the terms "means for" is not so intended.

## Claims

1. A method comprising in a first device:
performing inference of a first part of a split artificial intelligence, AI, model to obtain a first result and intermediate data for use in inference using a second part of the split AI model;
transmitting, to a second device, the intermediate data and an identifier; and
transmitting, to the second device, information representative of the first result to be combined with a second result resulting from the inference using the second part of the AI model and the identifier.

2. A method comprising in a first device:
performing inference of a first part of a split artificial intelligence, AI, model to obtain a first result and intermediate data for use in inference using a second part of the split AI model;
associating the first result with a first identifier;
transmitting, to a second device, the intermediate data and the first identifier;
receiving, from the second device, information representative of a second result to be combined with the first result and a second identifier; and
aggregating the first result and the second result using the first identifier and the second identifier.

3. The method of claim 2, further comprising:
post-processing the aggregated first result and second result; and
providing the post-processed aggregated first result and second result for consumption.

4. The method of claim 2, wherein:
the aggregating includes combining the first result and the second result on condition that the first identifier matches the second identifier.

5. The method of claim 1 or 2, further comprising:
determining, with the second device, a transmission format of the first result.

6. A method comprising in a second device:
receiving, from a first device, intermediate data resulting from inference using a first part of a split artificial intelligence, AI, model and a first identifier, the intermediate data intended for use in inference using a second part of the split AI model;
receiving, from a first device, information representative of a first result to be combined with a second result resulting from the inference using the second part of the AI model and a second identifier;
performing inference of the second part of the split artificial intelligence, AI, model to obtain a second result;
associating the second result with the first identifier; and
aggregating the first result and the second result using the first identifier and the second identifier.

7. A method comprising in a second device:
receiving, from a first device, intermediate data resulting from inference using a first part of a split artificial intelligence, AI, model and a first identifier, the intermediate data intended for use in inference using a second part of the split AI model;
performing inference of the second part of the split artificial intelligence, AI, model to obtain a second result; and
transmitting, to the first device, the second result and the first identifier.

8. A first device comprising at least one processor configured to:
perform inference of a first part of a split artificial intelligence, AI, model to obtain a first result and intermediate data for use in inference using a second part of the split AI model;
transmit, to a second device, the intermediate data and an identifier; and
transmit, to the second device, information representative of the first result to be combined with a second result resulting from the inference using the second part of the AI model and the identifier.

9. A first device comprising at least one processor configured to:
perform inference of a first part of a split artificial intelligence, AI, model to obtain a first result and intermediate data for use in inference using a second part of the split AI model;
associate the first result with a first identifier;
transmit, to a second device, the intermediate data and the first identifier;
receive, from the second device, information representative of a second result to be combined with the first result and a second identifier; and
aggregate the first result and the second result using the first identifier and the second identifier.

10. The first device of claim 9, wherein the at least one processor is further configured to:
post-process the aggregated first result and second result; and
provide the post-processed aggregated first result and second result for consumption.

11. The first device of claim 9, wherein the at least one processor is configured to:
aggregate the first result and the second result by combining the first result and the second result on condition that the first identifier matches the second identifier.

12. The first device of claim 8 or 9, wherein the at least one processor is further configured to:
determine, with the second device, a transmission format of the first result.

13. A second device comprising at least one processor configured to:
receive, from a first device, intermediate data resulting from inference using a first part of a split artificial intelligence, AI, model and a first identifier, the intermediate data intended for use in inference using a second part of the split AI model;
receive, from a first device, information representative of a first result to be combined with a second result resulting from the inference using the second part of the AI model and a second identifier;
perform inference of the second part of the split artificial intelligence, AI, model to obtain a second result;
associate the second result with the first identifier; and
aggregate the first result and the second result using the first identifier and the second identifier.

14. A second device comprising at least one processor configured to:
receive, from a first device, intermediate data resulting from inference using a first part of a split artificial intelligence, AI, model and a first identifier, the intermediate data intended for use in inference using a second part of the split AI model;
perform inference of the second part of the split artificial intelligence, AI, model to obtain a second result; and
transmit, to the first device, the second result and the first identifier.
